# EUROPEAN PATENT APPLICATION

(11) **EP 2 654 149 A1**
(43) Date of publication of application: **23.10.2013**
(21) Application number: 12165020.4
(22) Date of filing: 20.04.2012
(51) Int. Cl.: H02B 13/00, H02B 1/30

(54) **Panel with switchgear and alignment means**

(71) Applicant: Eaton Industries (Netherlands) B.V., 7559 SC Hengelo (NL)
(72) Inventor: Heilersig, Dinant, 7475 Markelo (NL); Van Dijk, Marcel, 7541 CH Enschede (NL); Hornok, Peter, 7553 MG Overijssel (NL); Damink, Ronnie Johannus Bernardus Maria, 7556 GR Overijssel (NL); D'Amico, Paolo, 6811 JD Arnhem (NL)
(74) Representative: Leadbetter, Benedict

(57) **Abstract**

The invention relates to a panel (1, 2) for switchgear, which panel comprises:
- a housing;
- at least one busbar (5, 6) extending from a first side of the panel to the opposite second side;
- connector elements (7, 8) arranged on each end of the at least one busbar for connection of the at least one busbar with a busbar of an adjacent panel; and
- alignment means (10, 15, 16, 17) for aligning two adjacent panels upon coupling the panels together and connecting the busbars through the connector elements.

## Description

The invention relates to a panel for switchgear, which panel comprises:
- a housing;
- at least one busbar extending from a first side of the panel to the opposite second side;
- connector elements arranged on each end of the at least one busbar for connection of the at least one busbar with a busbar of an adjacent panel.

Such panels are particularly used in medium and high voltage applications, wherein the panels house switchgear or related elements like measurment devices, current transformers and voltage transformers. Busbars carrying power run through the panels and switches make or brake contact with subnets or electrical devices.

The panels provide a modular system with which a desired number of switchgear can be connected to the busbars. To this end each panel is provided with at least one busbar (typically three busbars) and connector elements on each end of the busbar to connect with a busbar of an adjacent panel.

Because of the medium and high voltages carried by the busbars, it is necessary to align the busbars of adjacent panels in order to minimize electrical losses and high field concentrations due to disruptions in the connector elements.

With the known panels it is difficult to correctly align adjacent panels. As a result panels are first connected to each other and are then wired. However, when a panel has to be serviced, it is sometimes desired to deconnect a panel and to reconnect the panel when serviced. At such a moment it is difficult to correctly align the panel to be reconnected as the panel is then fully wired.

Another problem arises over time, when the panels settle, substantial stresses can occur in the connector elements and misalignment could occur.

To resolve this problem it is known to incorporate a rigid (metal) tube in the connector element to keep pressure on the insulation material and allow flexibility in the alignment. So, when the panels are misaligned, the rigid tubes ensure sufficient spacing of the insulation material sufficient pressure.

It is an object of the invention to reduce or even remove the above mentioned disadvantages.

This object is achieved with a panel according to the preamble, which is characterized by alignment means for aligning two adjacent panels upon coupling the panels together and connecting the busbars through the connector elements.

By providing alignment means, two adjacent panels can easily be aligned and moved together for connection with each other. Also, when two panels are already connected, the panels can be deconnected easily while maintaining the alignment with to the alignment means. This reduces any stresses on the connector elements and helps to minimize electrical losses and high electrical field densities.

In a preferred embodiment of the panel according to the invention the alignment means comprise at least one guide pin extending from the first side and corresponding holes arranged on the opposite side of the panel, such that on coupling the panels, the at least one guide pin is inserted in the corresponding hole.

The pins extending from the first side will be inserted in the holes on the second side of an adjacent panel, when connecting two panels. As soon the tip of a pin is inserted in the hole, the two adjacent panels are aligned. By ensuring that the pins extend further then the connector elements, the panels will always be aligned when the connector elements are getting into contact with each other.

In a further embodiment of the panel according to the invention the at least one guide pin is removable through the corresponding hole in the opposite side of the panel.

After mounting two adjacent panels it could be desired to remove the alignment pins.

In yet another preferred embodiment of the panel according to the invention the alignment means comprise at least one bulge arranged in the housing wall on the first side of the panel and a corresponding depression arranged in the housing wall on the opposite second side of the panel.

The bulge and depression provide a means for aligning two panels which could be used instead of the pins, but preferably in combination with pins. When the panels are mounted together, the bulge and corresponding depression ensure that the relative position of the panels is maintained and possible stresses due to settling of the panels are taken by the bulge and depression and not by the connector elements.

In a further embodiment of the panel according to the invention the connector elements comprise:
- two cups having a truncated cone shape each arranged in the first and second side of the panel, wherein the busbar end extends through the tip of the cone and into the cup;
- an insulating body having two opposite truncated cone shaped outer surfaces each for reception in one of the cups and having a central passage;
- an electrically conducting element for connecting with the busbar ends extending in the central passage of the insulating body, wherein the electrically conducting element is in direct contact with the insulating body.

Due to the alignment means, the connector elements are less subjected to stresses. As a result the connector elements can be simplified by providing the electrically conducting element in direct contact with the insulation.

These and other features of the invention will be elucidated in conjunction with the accompanying drawings.
Figures 1A - 1C show three steps of connecting two panels according to the invention.
Figure 2 shows a detailed cross sectional view of the connector elements according to the invention.
Figure 3 shows a detailed cross sectional view of the panel according to the invention.

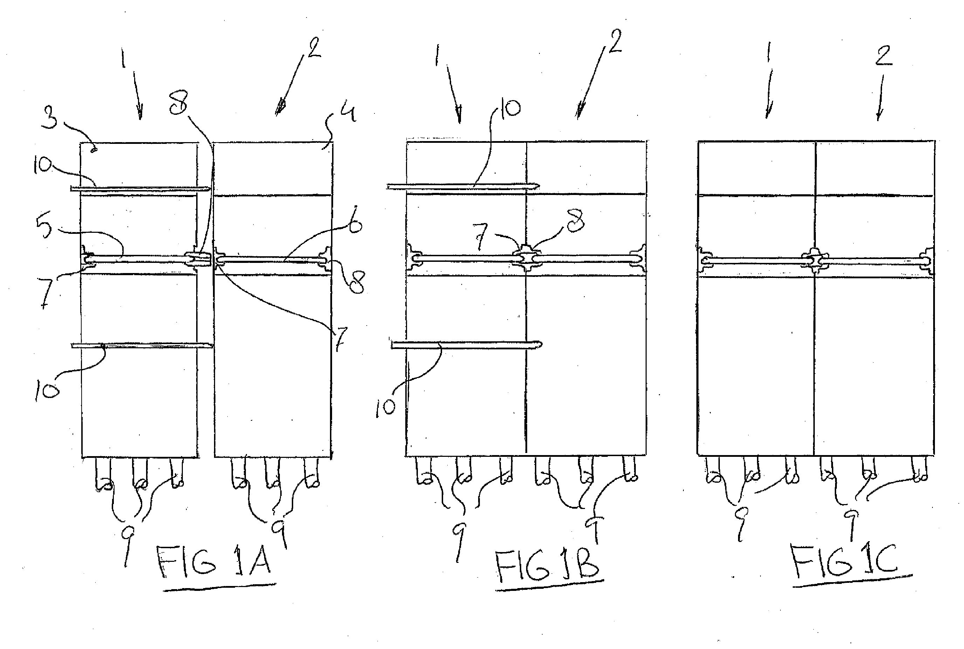

Figure 1A shows two embodiments of panels 1 and 2 according to the invention. Each panel 1, 2 has a housing 3, 4 with a busbar 5, 6. Connector elements 7, 8 are arranged on each end of the busbars 5, 6.

The busbars 5, 6 carry power, which is switched to electric cables 9 by the switchgear arranged in the panels 1, 2.

The panel 1 is provided with alignment pins 10, which extend through holes in the housing 3, 4 of the panels 1, 2.

When the panels 1, 2 are moved together, as shown in figure 1B, the pins 10 extend from the panel 1 into panel 2. This ensures that the panels 1, 2 are aligned.

When mounting the panels 1, 2 together, the connector elements 7, 8 are connected and due to the alignment of the pins 10, the connector elements 7, 8 are virtually stress free.

After bringing the panels 1, 2 together and mounting the panels 1, 2, the pins 10 may be removed, leaving the panels as shown in figure 1C.

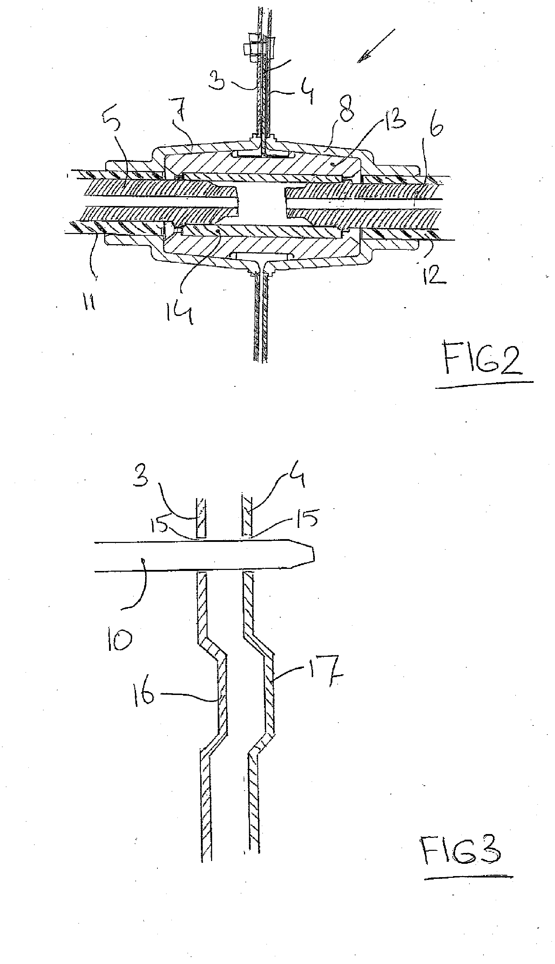

Figure 2 shows a cross sectional view of the connector elements 7, 8. These connector elements 7, 8 are mounted in the housing wall 3, 4. Each connector element 7, 8 has a truncated cone shape and the end of the busbar 5, 6 extends through the top of the cone shape.

The busbars 5, 6 are provided with an insulating layer 11, 12. Furthermore an insulating body 13 is arranged in between the connector elements 7, 8. In the central passage of the insulating body 13 an electrically conducting element 14 is provided which electrically connects both busbars 5, 6.

Because the panels 1, 2 are aligned with the alignment pins 10, the connector elements 7, 8 can be simplified in that the electrically conducting element 14 is in direct contact with the insulating body 13.

Figure 3 shows a cross sectional detail of the alignment pin 10. This pin 10 extends through holes 15 in the housings 3, 4 of the panels 1, 2.

Beneath the pin 10 a bulge 16 is arranged in a first side of the housing 3, while a depression 17 is provided in the second side of the housing 4. When both panels 1, 2 are connected together, the bulge 16 and depression 17 are nested and ensure that the panels 1, 2 are maintained in alignment, even when the pin 10 is removed from the holes 15.

## Claims

1. Panel for switchgear, which panel comprises:
- a housing;
- at least one busbar extending from a first side of the panel to the opposite second side;
- connector elements arranged on each end of the at least one busbar for connection of the at least one busbar with a busbar of an adjacent panel;
**characterized by**
- alignment means for aligning two adjacent panels upon coupling the panels together and connecting the busbars through the connector elements.

2. Panel according to claim 1, wherein the alignment means comprise at least one guide pin extending from the first side and corresponding holes arranged on the opposite side of the panel, such that on coupling the panels, the at least one guide pin is inserted in the corresponding hole.

3. Panel according to claim 2, wherein the at least one guide pin is removable through the corresponding hole in the opposite side of the panel.

4. Panel according to any of the preceding claims, wherein the alignment means comprise at least one bulge arranged in the housing wall on the first side of the panel and a corresponding depression arranged in the housing wall on the opposite second side of the panel.

5. Panel according to any of the preceding claims, wherein the connector elements comprise:
- two cups having a truncated cone shape each arranged in the first and second side of the panel, wherein the busbar end extends through the tip of the cone and into the cup;
- an insulating body having two opposite truncated cone shaped outer surfaces each for reception in one of the cups and having a central passage;
- an electrically conducting element for connecting with the busbar ends extending in the central passage of the insulating body, wherein the electrically conducting element is in direct contact with the insulating body.
